# EUROPÄISCHE PATENTSCHRIFT

(11) **EP 3 009 692 B1**
(45) Veröffentlichungstag und Bekanntmachung des Hinweises auf die Patenterteilung: **13.06.2018**
(21) Anmeldenummer: 15181715.2
(22) Anmeldetag: 20.08.2015
(51) Int. Cl.: A47B 88/90

(54) **BEWEGBARES MÖBELTEIL MIT VERBINDUNGSVORRICHTUNG**
MOVEABLE FURNITURE PART AND CONNECTING DEVICE
ELEMENT DE MEUBLE MOBILE ET ELEMENT DE CONNEXION

(30) Priorität: 16.10.2014 DE 202014104925 U
(43) Veröffentlichungstag der Anmeldung: 20.04.2016
(73) Patentinhaber: Grass GmbH, 6973 Höchst (AT)
(72) Erfinder: Grabher, Günter, 6972 Fußach (AT); Amann, Jürgen, 6890 Lustenau (AT)
(74) Vertreter: Otten, Roth, Dobler & Partner mbB Patentanwälte

(56) Entgegenhaltungen:
- US-A- 3 124 993
- US-A1- 2009 010 733
- US-E- R E31 106

## Beschreibung

Verbindungsvorrichtungen zum Verbinden zweier Wandelemente sind aus der US 3,124,993, der US 2009/0010733 A1 oder der US 4,212,560 bekannt.

Auf dem Gebiet des Möbelbaus sind Verbindungsvorrichtungen für zwei zueinander in einem Winkel angeordnete Wandelemente eines bewegbaren Möbelteils - wie z.B. eine Verbindung einer Frontblende mit einer Seitenzarge - in verschiedensten Ausführungen bekannt.

Die Aufgabe der vorliegenden Erfindung besteht darin, ein bewegbares Möbelteil mit einer Verbindungsvorrichtung bereitzustellen, bei dem sich die Herstellung des bewegbaren Möbelteils vereinfachen lässt.

Die Aufgabe wird durch ein bewegbares Möbelteil mit einer Verbindungsvorrichtung mit den Merkmalen des Anspruchs 1 gelöst.

Bevorzugte und vorteilhafte Ausführungen der Erfindung sind in den Unteransprüchen angegeben.

Die Erfindung geht von einem bewegbaren Möbelteil mit einer Verbindungsvorrichtung für zwei zueinander in einem Winkel angeordnete Wandelemente eines bewegbaren Möbelteils aus. Der Kern der Erfindung besteht darin, dass an der Verbindungsvorrichtung ein erster Anbringabschnitt und ein zweiter Anbringabschnitt ausgebildet sind, die entlang einer gemeinsamen Verbindungsachse durch einen dazwischenliegenden Verbindungsabschnitt miteinander verbunden sind, wobei der erste Anbringabschnitt senkrecht zur Verbindungsachse einen größeren Querschnitt als der Verbindungsabschnitt aufweist. Der zweite Anbringabschnitt ist dabei für eine Anbringung an einer Schmalseite eines zweiten Wandelementes ausgebildet, die zur Anordnung an einer Wandfläche eines ersten Wandelements vorgesehen ist. Ein erster Umrissabschnitt des Querschnitts des ersten Anbringabschnitts weist hierbei in einer Richtung senkrecht zur Verbindungsachse einen größeren Abstand als ein zweiter Umrissabschnitt des ersten Anbringabschnitts in einer zweiten Richtung auf. Der erste Anbringabschnitt ist an der Verbindungsvorrichtung um die Verbindungsachse und insbesondere gegenüber dem zweiten Anbringabschnitt drehbar angebracht. Eine axiale Länge des Verbindungsabschnitts ist dabei derart an eine Wandstärke des ersten Wandelements angepasst, dass der erste Anbringabschnitt nach einem Durchstecken durch eine Anbringöffnung am ersten Wandelement - bei an der Schmalseite des zweiten Wandelements angebrachtem zweitem Anbringabschnitt - durch Drehen am ersten Anbringabschnitt verriegelbar ist, wenn ein Durchmesser der Anbringöffnung kleiner als ein Durchmesser des ersten Anbringabschnitts im verriegelten Zustand ist.

Das erste Wandelement lässt sich somit für eine Montage am zweiten Wandelement an der Verbindungsvorrichtung, die am zweiten Wandelement angebracht ist, einhängen und durch Drehen des ersten Anbringabschnitts formschlüssig mit dem zweiten Wandelement verbinden. Dabei ist ein Verbinden vorteilhaft schnell und insbesondere werkzeuglos durchführbar. Außerdem ist mit der Verbindungsvorrichtung auf einfache Weise eine lösbare Anbringung des ersten Wandelements am zweiten Wandelement möglich, wobei ein Lösen und ein Verbinden der beiden Wandelemente gegebenenfalls beliebig oft ausführbar ist.

Der zweite Anbringabschnitt ist für eine Anbringung am zweiten Wandelement ausgebildet, wobei sich der zweite Anbringabschnitt vorzugsweise in eine schmale Stirnseite, die zum Anliegen am ersten Wandelement vorgesehen ist, einsetzen und insbesondere befestigen lässt. Hierfür kann der zweite Anbringabschnitt beispielsweise mit einem Gewinde zu Einschrauben am zweiten Wandelement versehen sein. Außerdem kann der zweite Wandabschnitt als Einschlag- bzw. Spreizdübel ausgebildet sein, um am zweiten Wandelement in einer dafür vorgesehenen Bohrung verankerbar zu sein. Der zweite Anbringabschnitt kann somit in einem ersten vorbereitenden Schritt am zweiten Wandelement angebracht werden, wodurch Maßnahmen für diesen ersten Schritt beim Verbinden der beiden Wandelement entfallen und das Verbinden der Wandelemente nicht mehr beeinträchtigen können.

Eine bevorzugte Ausführung der Erfindung besteht darin, dass am ersten Umrissabschnitt ein Arretierelement ausgebildet ist, mit dem ein Randabschnitt der Anbringöffnung des ersten Wandelements, durch die der erste Anbringabschnitt durchsteckbar ist, für eine Vormontage in einer ersten Stellung einhängbar ist, und dass die Verbindungsvorrichtung derart ausgebildet ist, dass das erste Wandelement von der ersten Stellung in eine Endposition bewegbar ist, in der der erste Anbringabschnitt durch Drehen am ersten Wandelement verriegelbar ist. In der Endposition des ersten Wandelements ist der erste Anbringabschnitt vorzugsweise vollständig durch die Anbringöffnung durchgesteckt. Dabei lässt sich das erste Wandelement von einem rückseitigen Flächenbereich des ersten Anbringabschnitts am zweiten Wandelement in Anlage halten. Durch die Möglichkeit, das erste Wandelement in einer ersten für eine Vormontage vorgesehenen Stellung halten zu können, ist eine Anordnung der Schubladenelemente möglich, die einer fertig montierten Anordnung vorteilhaft ähnlich ist und die Korrekturen und Anpassungen an den Schubladenteilen und deren Lage zueinander zulässt. Dabei können weitere Verbindungs- und Befestigungsmittel an einer Schublade vorteilhaft genau angebracht werden.

Des Weiteren ist es bevorzugt, dass der erste Anbringabschnitt symmetrisch bezüglich der Verbindungsachse geformt ist. Dabei kann der Anbringabschnitt in zwei entgegengesetzte Richtungen von der Verbindungsachse gleichförmig abstehend geformt sein, d.h. mit dem Verbindungsabschnitt eine T-Form bilden. Der erste Anbringabschnitt ist dadurch vergleichsweise leicht für ein Drehen in z.B. eine anbringende Stellung greifbar.

Vorzugsweise ist der erste Anbringabschnitt zum Verbindungsabschnitt drehbar angebracht, wobei auf dem zweiten Anbringabschnitt dadurch weniger oder kein Drehmoment übertragbar ist.

Außerdem kann der Verbindungsabschnitt am zweiten Anbringabschnitt drehbar angebracht sein, um zum Beispiel den ersten Anbringabschnitt und den Verbindungsabschnitt einstückig und vergleichsweise stabil ausbilden zu können. Vorzugsweise ist an einer Kante einer Seite des ersten Anbringabschnitts, die den zweiten Anbringabschnitt zugewandt ist, eine Fase ausgebildet. Durch eine schräge Fase lässt sich der erste Anbringabschnitt leichter in eine verriegelnde Position an der Anbringöffnung des ersten Wandelements drehen. Nachfolgend wird anhand eines Ausführungsbeispiels die Erfindung näher erläutert und mit Hilfe der Zeichnungen beschrieben. Die Ausführungsbeispiele sind in den Figuren schematisch und nicht maßstäblich gezeigt.

Es zeigen:
- Figur 1: eine perspektivische Ansicht eines erfindungsgemäßen bewegbaren Möbelteils mit einer Verbindungsvorrichtung,

- Figur 2: eine perspektivische Ansicht einer Verbindungsvorrichtung,
- Figur 3: eine perspektivische Ansicht einer Schublade,
- Figur 4: eine perspektivische Ansicht einer Rückwand,
- Figur 5: eine perspektivische Ansicht der Schublade in einem Vormontagezustand,
- Figur 6: eine Seitenansicht der Rückwand mit der Verbindungsvorrichtung,
- Figur 7: ein vergrößerter Ausschnitt aus der Figur 5.

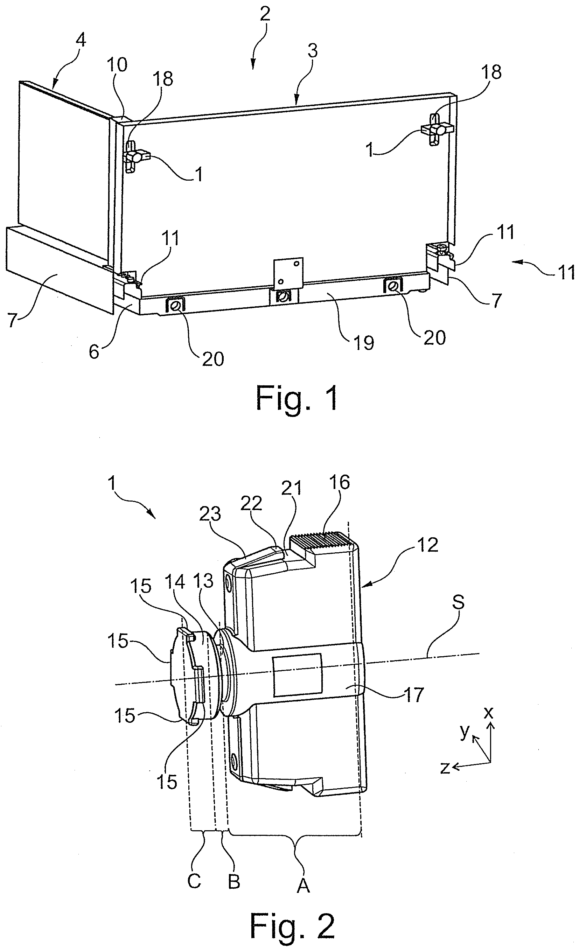

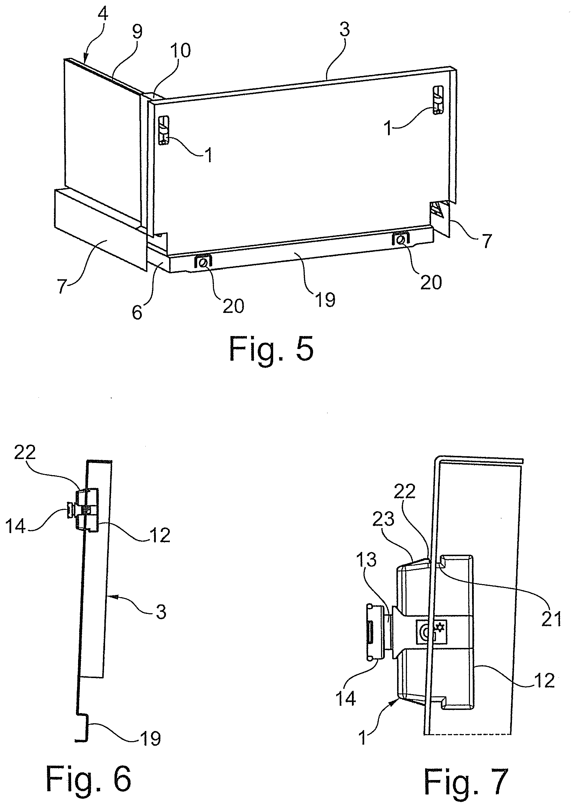

In den Figuren 1, 2, 5, 6 und 7 ist ein Ausführungsbeispiel einer Verbindungsvorrichtung 1 eines erfindungsgemäßen bewegbares Möbelteil 2 gezeigt. In den Figuren 1, 3 und 5 ist ein erfindungsgemäßen bewegbaren Möbelteil 2 als Teil eines Möbels gezeigt, an der die Verbindungsvorrichtung 1 zur Anbringung einer Rückwand 3 eingesetzt ist, gezeigt. Dabei ist die Schublade 2 in den Figuren 1, 3 und 5 in einem teilweise montierten Zustand gezeigt, in welchem zwei Seitenzargen 4 und 5, ein Schubladenboden 6 und die Rückwand 3 zusammengesetzt sind.

Jede der Seitenzargen 4 und 5 kann einen schienenförmigen Zargenkörper 7 aufweisen, in welchem insbesondere eine Führungseinheit 11 für eine bewegliche Lagerung der Schublade 2 installiert sein kann. Am Zargenkörper ist mindestens eine Verbindungskonsole 8 vorzugsweise aufragend angebracht. Die Verbindungskonsole 8 ist zur Anbringung einer z.B. Platte 9 vorgesehen, die mit einer Abdeckhülse 10 an der Verbindungskonsole 8 z.B. gesichert sein kann. Des Weiteren ist die Verbindungskonsole 8 zur Anbringung der Verbindungsvorrichtung 1 bestimmt.

Die Verbindungsvorrichtung 1 umfasst einen ersten Anbringabschnitt 12, einen insbesondere zylinderförmigen Verbindungsabschnitt 13 und einen zweiten Anbringabschnitt 14, die entlang einer geraden Achse S in der genannten Reihenfolge (in z-Richtung) nacheinander und insbesondere symmetrisch zur Achse S angeordnet sind. Der zweite Anbringabschnitt 14 kann fest mit dem Verbindungsabschnitt 13 verbunden sein, wobei der erste Anbringabschnitt 12 vorzugsweise drehbar am Verbindungsabschnitt 13 gelagert und angebracht ist. Dabei kann der Verbindungsabschnitt 13 in den ersten Anbringabschnitt 12 hinein- und gegebenenfalls durch diesen hindurchreichen.

Die Verbindungsvorrichtung 1 erstreckt sich seitlich von der Achse S abstehend mit unterschiedlichen Querschnitten. Dabei ist im Abschnitt A der Querschnitt vom ersten Anbringabschnitt 12, im Abschnitt B vom Verbindungsabschnitt 13 und im Abschnitt C vom zweiten Anbringabschnitt 14 bestimmt. Der zweite Anbringabschnitt 14 weist mehrere in verschiedene Richtungen hervorstehende Steckvorsprünge 15 auf, mit denen der zweite Anbringabschnitt 14 für eine nicht drehbare Anbringung an die Verbindungskonsole 8 angepasst ist. Dabei ragt die Verbindungsvorrichtung 1 vorzugsweise mit dem Verbindungsabschnitt 13 und mit dem ersten Anbringabschnitt 14 aus der Verbindungskonsole 8 an der Rückseite der Schublade 2 heraus.

Der erste Anbringabschnitt 12 ist näherungsweise quaderförmig ausgebildet. Dabei ist ein erster Umrissabschnitt 16 des Querschnitts des ersten Anbringabschnitts 12 in x-Richtung weiter von der Achse S abstehend erstreckt als ein zweiter Umrissabschnitt 17. An der Rückwand 3 sind Öffnungen 18 in seitlichen Bereichen ausgeschnitten, mit denen die Rückwand 3 an den Verbindungskonsolen 8 anliegen kann. Die Öffnungen 18 sind derart an den ersten Anbringabschnitt 12 angepasst, dass der erste Anbringabschnitt 12 bei senkrecht gestelltem Querschnitt durch die Öffnung 18 durchsteckbar ist. Zudem ist die Öffnung 18 in horizontaler Richtung an die schmale Erstreckung des ersten Anbringabschnitts in der y-Richtung angepasst, wodurch sich die Rückwand 3 mit der Verbindungsvorrichtung 1 durch eine Drehung des ersten Anbringabschnitts 12 nach einem Durchstecken durch die Öffnung 18 verriegeln und somit an der Verbindungskonsole 8 anbringen lässt.

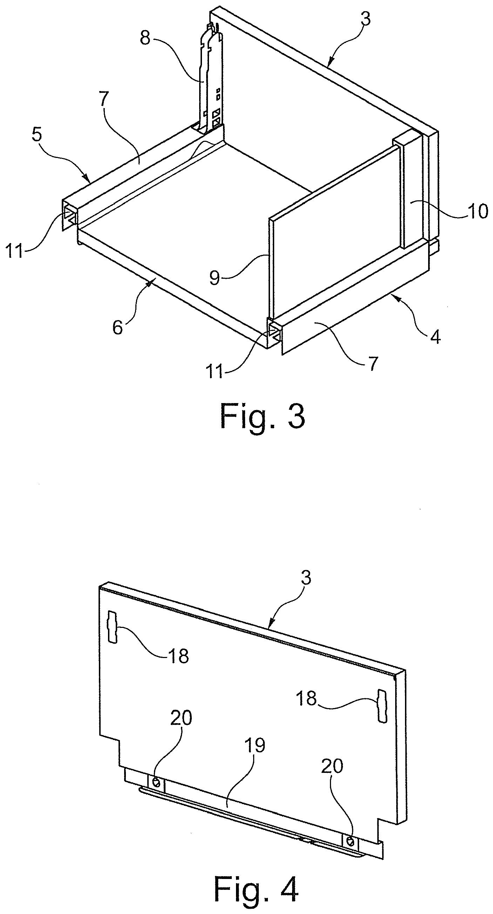

Wie sich der Figur 4 entnehmen lässt, ist an der Rückwand 3 ein horizontal verlaufender kanalartiger Profilabschnitt 19 ausgebildet, der für eine Aufnahme eines Randbereichs des Schubladenbodens 6 vorgesehen ist. Dabei weist der Profilabschnitt 19 Lochöffnungen 20 auf, an denen die Rückwand 3 am Schubladenboden 6 z.B. mit Schrauben (nicht gezeigt) befestigt werden kann. Um die Rückwand 3 bei einer Montage in einer geeigneten Position zu halten, ist am ersten Anbringabschnitt 12 eine Vertiefung 21 ausgebildet, an der der erste Umrissabschnitt 16 nutförmig abgesenkt ist. Zum Verbindungsabschnitt 13 hin ist die Vertiefung von einer zunächst steil aufragenden Rastnase 22 begrenzt, die mit einem Rampenabschnitt 23 zum Verbindungsabschnitt hin leicht abfällt. Eine Breite in z-Richtung der Vertiefung 21 ist vorzugsweise an eine Materialdicke der Rückwand im Bereich der Öffnungen 18 abgestimmt. Dadurch kann die Rückwand 3 mittels der Öffnungen 18 an den Vertiefungen 21 des ersten Anbringabschnitts 12 für eine Vormontage eingehängt und dabei festgehalten werden, wodurch ein z.B. Anschrauben der Rückwand 3 am Schubladenboden 6 an den Lochöffungen 20 erleichtert ist.

### Bezugszeichenliste:

- 1: Verbindungsvorrichtung
- 2: Schublade
- 3: Rückwand
- 4: Seitenzarge
- 5: Seitenzarge
- 6: Schubladenboden
- 7: Zargenkörper
- 8: Verbindungskonsole
- 9: Wandelement
- 10: Abdeckhülse
- 11: Führungseinheit
- 12: Anbringabschnitt
- 13: Verbindungsabschnitt
- 14: Anbringabschnitt
- 15: Steckvorsprünge
- 16: Umrissabschnitt
- 17: Umrissabschnitt
- 18: Öffnung
- 19: Profilabschnitt
- 20: Lochöffnungen
- 21: Vertiefung
- 22: Rastnase
- 23: Rampenabschnitt

## Patentansprüche

1. Bewegbares Möbelteil (2) mit einer Verbindungsvorrichtung (1) mit zwei zueinander in einem Winkel angeordneten Wandelementen (3, 4, 5) des bewegbaren Möbelteils (2), wobei dass an der Verbindungsvorrichtung (1) ein erster Anbringabschnitt (12) und ein zweiter Anbringabschnitt (14) ausgebildet sind, die entlang einer gemeinsamen Verbindungsachse S durch einen dazwischenliegenden Verbindungsabschnitt (13) miteinander verbunden sind, wobei der erste Anbringabschnitt (12) senkrecht zur Verbindungsachse S einen größeren Querschnitt als der Verbindungsabschnitt (13) aufweist, wobei der zweite Anbringabschnitt (14) für eine Anbringung an einer Schmalseite des zweiten Wandelements (4, 5) ausgebildet ist, die zur Anordnung an einer Wandfläche des ersten Wandelements (3) vorgesehen ist, wobei ein erster Umrissabschnitt (16) des Querschnitts des ersten Anbringabschnitts (12) in einer ersten Richtung senkrecht zur Verbindungsachse S einen größeren Abstand als ein zweiter Umrissabschnitt (17) des ersten Anbringabschnitts (12) in einer zweiten Richtung aufweist, wobei der erste Anbringabschnitt (12) an der Verbindungsvorrichtung (1) um die Verbindungsachse S drehbar angebracht ist, und wobei eine axiale Länge des Verbindungsabschnitts (13) derart an eine Wandstärke des ersten Wandelements (3) angepasst ist, dass der erste Anbringabschnitt (12) nach einem Durchstecken durch eine Anbringöffnung (18) am ersten Wandelement (3) - bei an der Schmalseite des zweiten Wandelements (4, 5) angebrachtem zweitem Anbringabschnitt (14) - durch Drehen am ersten Wandelement (3) verriegelbar ist, wenn ein Durchmesser der Anbringöffnung (18) kleiner als ein Durchmesser des ersten Anbringabschnitts (12) im verriegelten Zustand ist.

2. Bewegbares Möbelteil (2) mit einer Verbindungsvorrichtung (1) nach Anspruch 1, **dadurch gekennzeichnet,**
**dass** am ersten Umrissabschnitt (16) ein Arretierelement (22) ausgebildet ist, mit dem ein Randabschnitt der Anbringöffnung (18) des ersten Wandelements (3), durch die der erste Anbringabschnitt (12) durchsteckbar ist, für eine Vormontage in einer ersten Stellung einhängbar ist, und dass die Verbindungsvorrichtung (1) derart ausgebildet ist, dass das erste Wandelement (3) von der ersten Stellung in eine Endposition bewegbar ist, in der der erste Anbringabschnitt (12) durch Drehen am ersten Wandelement (3) verriegelbar durchgesteckt ist.

3. Bewegbares Möbelteil (2) mit einer Verbindungsvorrichtung (1) nach einem der vorgenannten Ansprüche, **dadurch gekennzeichnet, dass** der erste Anbringsabschnitt (12) symmetrisch bezüglich der Verbindungsachse S geformt ist.

4. Bewegbares Möbelteil (2) mit einer Verbindungsvorrichtung (1) nach einem der vorgenannten Ansprüche, **dadurch gekennzeichnet, dass** der erste Anbringabschnitt (12) zum Verbindungsabschnitt (13) drehbar ist.

5. Bewegbares Möbelteil (2) mit einer Verbindungsvorrichtung (1) nach einem der vorgenannten Ansprüche, **dadurch gekennzeichnet, dass** der Verbindungsabschnitt (13) am zweiten Anbringabschnitt (14) drehbar angebracht ist.

6. Bewegbares Möbelteil (2) mit einer Verbindungsvorrichtung (1) nach einem der vorgenannten Ansprüche, **dadurch gekennzeichnet, dass** an einer Kante einer Seite des ersten Anbringabschnitts (12), die dem zweiten Anbringabschnitt (14) zugewandt ist, eine Fase ausgebildet ist.

## Claims

1. Movable furniture part (2) with a connecting device (1) having two wall elements (3, 4, 5) of the movable furniture part (2) arranged at an angle to one another, wherein on the connecting device (1) a first attachment section (12) and a second attachment section (14) are formed, which are joined together along a common connecting axis S by an intermediate connecting section (13), wherein the first attachment section (12) perpendicular to the connecting axis S has a greater cross-section than the connecting section (13), wherein the second attachment section (14) is designed for attachment to a narrow side of the second wall element (4, 5), which is provided for arranging on a wall surface of the first wall element (3), wherein a first outline section (16) of the cross-section of the first attachment section (12) in a first direction perpendicular to the connecting axis S has a greater distance than a second outline section (17) of the first attachment section (12) in a second direction, wherein the first attachment section (12) is attached rotatably onto the connecting device (1) about the connecting axis S, and wherein an axial length of the connecting section (13) is adjusted to a wall thickness of the first wall element (3) such that the first attachment section (12) after inserting through an attachment opening (18) can be locked on the first wall element (3) - with a second attachment section (14) attached onto the narrow side of the second wall element (4, 5) - by rotation on the first wall element (3), if a diameter of the attachment opening (18) is smaller than a diameter of the first attachment section (12) in the locked state.

2. Movable furniture part (2) with a connecting device (1) according to claim 1, **characterised in that** on the first contour section (16) a locking element (22) is formed, by means of which an edge section of the attachment opening (18) of the first wall element (3), through which the first attachment section (12) can be inserted, can be suspended in a first position for preassembly, and **in that** the connecting device (1) is designed such that the first wall element (3) can be moved from the first position to an end position, in which the first attachment section (12) by rotation on the first wall element (3) is inserted in a lockable manner.

3. Movable furniture part (2) with a connecting device (1) according to any of the preceding claims, **characterised in that** the first attachment section (12) is shaped symmetrically relative to the connecting axis S.

4. Movable furniture part (2) with a connecting device (1) according to any of the preceding claims, **characterised in that** the first attachment section (12) is rotatable relative to the connecting section (13).

5. Movable furniture part (2) with a connecting device (1) according to any of the preceding claims, **characterised in that** the connecting section (13) is attached rotatably onto the second attachment section (14).

6. Movable furniture part (2) with a connecting device (1) according to any of the preceding claims, **characterised in that** a chamfering is formed on an edge of one side of the first attachment section (12), which faces the second attachment section (14).

## Revendications

1. Pièce de meuble mobile (2) comprenant un dispositif de liaison (1), deux éléments paroi (3, 4, 5) de la pièce de meuble mobile (2) lesquels sont disposés entre eux en formant un angle, une première partie de montage (12) et une deuxième partie de montage (14) étant formées sur le dispositif de liaison (1) et étant reliées l'une à l'autre par une partie de liaison (13) située entre elles le long d'un axe de liaison S commun, la première partie de montage (12) présentant perpendiculairement à l'axe de liaison S une section transversale plus grande que celle de la partie de liaison (13), la deuxième partie de montage (14) étant conçue pour être montée sur un petit côté du deuxième élément paroi (4, 5), lequel petit côté est destiné à être disposé sur une surface de paroi du premier élément paroi (3), une première partie de contour (16) de la section transversale de la première partie de montage (12) présentant dans une première direction perpendiculaire à l'axe de liaison S une distance plus importante qu'une deuxième partie de contour (17) de la première partie de montage (12) dans une deuxième direction, la première partie de montage (12) étant montée sur le dispositif de liaison (1) de manière à pouvoir tourner autour de l'axe de liaison S, et une longueur axiale de la partie de liaison (13) étant adaptée de telle manière à une épaisseur de paroi du premier élément paroi (3) que la première partie de montage (12), après être passée à travers une ouverture de montage (18) sur le premier élément paroi (3) - lorsque la deuxième partie de montage (14) est montée sur le petit côté du deuxième élément paroi (4, 5) -, peut être verrouillée par rotation sur le premier élément paroi (3), lorsqu'un diamètre de l'ouverture de montage (18) est inférieur à un diamètre de la première partie de montage (12) à l'état verrouillé.

2. Pièce de meuble mobile (2) comprenant un dispositif de liaison (1) selon la revendication 1, **caractérisée en ce qu'**un élément de blocage (22) est formé sur la première partie de contour (16), au moyen duquel une partie de bord de l'ouverture de montage (18) du premier élément paroi (3), à travers laquelle la première partie de montage (12) peut être insérée, peut être suspendue dans une première position aux fins d'un montage préliminaire, et **en ce que** le dispositif de liaison (1) est conçu de telle manière que le premier élément paroi (3) peut être déplacé de la première position dans une position finale dans laquelle la première partie de montage (12) est insérée sur le premier élément paroi (3) à la suite d'une rotation de manière à ce qu'elle puisse être verrouillée.

3. Pièce de meuble mobile (2) comprenant un dispositif de liaison (1) selon l'une quelconque des revendications précédentes, **caractérisée en ce que** la première partie de montage (12) est formée de manière symétrique par rapport à l'axe de liaison S.

4. Pièce de meuble mobile (2) comprenant un dispositif de liaison (1) selon l'une des revendications précédentes, **caractérisée en ce que** la première partie de montage (12) est mobile en rotation par rapport à la partie de liaison (13).

5. Pièce de meuble mobile (2) comprenant un dispositif de liaison (1) selon l'une des revendications précédentes, **caractérisée en ce que** la partie de liaison (13) est montée mobile en rotation sur la deuxième partie de montage (14).

6. Pièce de meuble mobile (2) comprenant un dispositif de liaison (1) selon l'une des revendications précédentes, **caractérisée en ce qu'**un chanfrein est formé sur un bord d'un côté de la première partie de montage (12) qui est dirigé vers la deuxième partie de montage (14).
